# EUROPEAN PATENT APPLICATION

(11) **EP 3 979 576 A1**
(43) Date of publication of application: **06.04.2022**
(21) Application number: 20836741.7
(22) Date of filing: 17.05.2020
(51) Int. Cl.: H04L 12/761

(54) **PACKET FORWARDING METHOD, DEVICE, AND COMPUTER-READABLE STORAGE MEDIUM**

(30) Priority: 05.07.2019 CN 201910606586
(71) Applicant: Huawei Technologies Co., Ltd., Longgang District Shenzhen, Guangdong 518129 (CN)
(72) Inventor: XIE, Jingrong, Shenzhen, Guangdong 518129 (CN); XIA, Yang, Shenzhen, Guangdong 518129 (CN); DUAN, Fanghong, Shenzhen, Guangdong 518129 (CN); WANG, Heng, Shenzhen, Guangdong 518129 (CN); LIN, Biyi, Shenzhen, Guangdong 518129 (CN)
(74) Representative: Maiwald Patent- und Rechtsanwaltsgesellschaft mbH
(86) International application number: PCT/CN2020/090726
(87) International publication number: WO 2021/004156

(57) **Abstract**

This application discloses a packet forwarding method and device, and a computer-readable storage medium, and belongs to the field of communications technologies. The method is used to forward a BIER packet, and the method includes: A destination node device starts a timer when the destination node device determines that a network topology changes; before the timer expires, the destination node device forwards the BIER packet by using an old forwarding table and establishes a new forwarding table, where the old forwarding table is a forwarding table used by the destination node device before the network topology changes, the new forwarding table is a forwarding table established by the destination node device based on the changed network topology, and the timer indicates that establishment of the new forwarding table is completed before the timer expires; and after the timer expires, the destination node device switches the old forwarding table to the new forwarding table, and forwards the BIER packet according to the new forwarding table. This application can avoid or reduce a packet loss and excess packets.

## Description

This application claims priority to Chinese Patent Application No. 201910606586.9, filed with the China National Intellectual Property Administration on July 5, 2019 and entitled "PACKET FORWARDING METHOD AND DEVICE, AND COMPUTER-READABLE STORAGE MEDIUM", which is incorporated herein by reference in its entirety.

### TECHNICAL FIELD

This application relates to the field of communications technologies, and in particular, to a packet forwarding method and device, and a computer-readable storage medium.

### BACKGROUND

A bit index explicit replication (bit indexed explicit replication, BIER) technology is a multicast technology. In the BIER technology, a BIER forwarding router identifier (BIER Forwarding Router id, BFR-id) is configured for each edge node device on a network. Configuration information of the edge node device is flooded on the network through interior gateway protocol (Interior Gateway Protocol, IGP) flooding, so that each node on the network can determine a device that is identified by each BFR-id. In addition, each node on the network establishes a forwarding table based on information flooded by a control plane over IGP, and each node may forward a BIER packet on a forwarding plane by using the forwarding table.

### SUMMARY

Embodiments of this application provide a packet forwarding method and device, and a computer-readable storage medium, to resolve a problem in a related technology. Technical solutions are as follows.

According to one aspect, a packet forwarding method is provided. The method is used to forward a BIER packet, and the method includes: A destination node device starts a timer when the destination node device determines that a network topology changes; before the timer expires, the destination node device forwards the BIER packet by using an old forwarding table and establishes a new forwarding table, where the old forwarding table is a forwarding table used by the destination node device before the network topology changes, the new forwarding table is a forwarding table established by the destination node device based on the changed network topology, and the timer indicates that establishment of the new forwarding table is completed before the timer expires; and after the timer expires, the destination node device switches the old forwarding table to the new forwarding table, and forwards the BIER packet according to the new forwarding table.

When the network topology changes, the destination node device forwards the BIER packet by using the old forwarding table and establishes the new forwarding table before the timer expires, switches the old forwarding table to the new forwarding table after the timer expires, and forwards the BIER packet by using the new forwarding table. This avoids or reduces a packet loss and excess packets.

In an example embodiment, when the destination node device determines that the network topology changes, the method further includes: The destination node device determines, according to the old forwarding table, whether a loop exists on a packet forwarding path after the network topology changes; and before starting the timer, the destination node device determines, according to the old forwarding table, that no loop exists on the packet forwarding path after the network topology changes.

The timer is started only when it is determined, according to the old forwarding table, that no loop exists on the packet forwarding path after the network topology changes. This avoids link congestion caused by timing of the timer when the loop exists.

In an example embodiment, when the destination node device determines that the network topology changes, the method further includes: The destination node device determines, according to the old forwarding table, whether a loop exists on a packet forwarding path after the network topology changes; and when determining, according to the old forwarding table, that the loop exists on the packet forwarding path after the network topology changes, the destination node device does not start the timer, and establishes the new forwarding table; and after establishment of the new forwarding table is completed, the destination node device switches the old forwarding table to the new forwarding table, and forwards the BIER packet according to the new forwarding table.

When it is determined, according to the old forwarding table, that the loop exists on the packet forwarding path after the network topology changes, the timer is not started and the new forwarding table is directly established. After establishment of the new forwarding table is completed, the old forwarding table is switched to the new forwarding table. The BIER packet is forwarded according to the new forwarding table to avoid link congestion.

In an example embodiment, when the destination node device determines that the network topology changes, the method further includes: The destination node device determines, according to the old forwarding table, whether a loop exists on a packet forwarding path after the network topology changes; and when determining, according to the old forwarding table, that the loop exists on the packet forwarding path after the network topology changes, the destination node device does not start the timer, updates the old forwarding table based on the changed network topology, and forwards the BIER packet according to the updated forwarding table.

When it is determined, according to the old forwarding table, that the loop exists on the packet forwarding path after the network topology changes, the timer is not started and the old forwarding table is directly updated. The BIER packet is forwarded according to the updated forwarding table to avoid link congestion.

In an example embodiment, the packet forwarding path includes a first path and a second path that is calculated based on the changed network topology. The first path is a path from the destination node device to each neighbor of the destination node device in the old forwarding table. The second path uses each neighbor of the destination node device in the old forwarding table as a start point, and uses an edge node device indicated by a forwarding bit mask of each neighbor of the destination node device as an end point. Existence of the loop means that the second path travels through the destination node device.

In an example embodiment, that the destination node device determines, according to the old forwarding table, whether a loop exists on a packet forwarding path after the network topology changes includes: For any neighbor of the destination node device in the old forwarding table, the destination node device determines whether a path, indicated by a forwarding bit mask of the any neighbor, of each edge node device in the changed network topology travels through the destination node device; and when a path of any edge node device in the changed network topology travels through the destination node device, determines that the loop exists on the packet forwarding path after the network topology changes; or when the path of each edge node device in the changed network topology does not travel through the destination node device, determines that no loop exists on the packet forwarding path after the network topology changes.

In an example embodiment, that the destination node device determines, according to the old forwarding table, whether a loop exists on a packet forwarding path after the network topology changes includes: The destination node device establishes a shortest path tree in the changed network topology by using each neighbor of the destination node device in the old forwarding table as a root; traverses identifiers of edge node devices that arrive on the shortest path tree through the destination node device, to obtain a bit string; performs an AND operation on the bit string and the forwarding bit mask of the neighbor of the destination node device; and when a result is 0, determines that no loop exists on the packet forwarding path after the network topology changes; or when a result is not 0, determines that the loop exists on the packet forwarding path after the network topology changes.

In an example embodiment, before the timer expires, that the destination node device forwards the BIER packet by using an old forwarding table and establishes a new forwarding table includes: Before the timer expires, the destination node device forwards the BIER packet by using old multiple load balancing entries, and establishes new multiple load balancing entries based on a quantity of load balancing paths; and after the timer expires, that the destination node device switches the old forwarding table to the new forwarding table, and forwards the BIER packet according to the new forwarding table includes: After the timer expires, the destination node device switches a forwarding table of the multiple load balancing entries to the new multiple load balancing entries, and forwards the BIER packet according to the new multiple load balancing entries.

An embodiment of this application further provides a packet forwarding node device. The packet forwarding node device is configured to forward a BIER packet, and the packet forwarding node device includes: a starting module, configured to start a timer when it is determined that a network topology changes; a forwarding module, configured to: before the timer expires, forward the BIER packet by using an old forwarding table, where the old forwarding table is a forwarding table used by the packet forwarding node device before the network topology changes; and an establishment module, configured to: before the timer expires, establish a new forwarding table, where the new forwarding table is a forwarding table established by the packet forwarding node device based on the changed network topology, and the timer indicates that establishment of the new forwarding table is completed before the timer expires; the forwarding module is further configured to: after the timer expires, switch the old forwarding table to the new forwarding table, and forward the BIER packet according to the new forwarding table.

In an example embodiment, the packet forwarding node device further includes: a determining module, configured to determine, according to the old forwarding table, whether a loop exists on a packet forwarding path after the network topology changes; and before the starting module starts the timer, the determining module determines, according to the old forwarding table, that no loop exists on the packet forwarding path after the network topology changes.

In an example embodiment, the packet forwarding node device further includes: a determining module, configured to determine, according to the old forwarding table, whether a loop exists on a packet forwarding path after the network topology changes; and when it is determined, according to the old forwarding table, that the loop exists on the packet forwarding path after the network topology changes, the starting module does not start the timer, and the establishment module establishes the new forwarding table; and after establishment of the new forwarding table is completed, the forwarding module switches the old forwarding table to the new forwarding table, and forwards the BIER packet according to the new forwarding table.

In an example embodiment, the packet forwarding node device further includes: a determining module, configured to determine, according to the old forwarding table, whether a loop exists on a packet forwarding path after the network topology changes; and when it is determined, according to the old forwarding table, that the loop exists on the packet forwarding path after the network topology changes, the starting module does not start the timer, and the forwarding module is configured to update the old forwarding table based on the changed network topology, and forward the BIER packet according to the updated forwarding table.

In an example embodiment, the packet forwarding path includes a first path and a second path that is calculated based on the changed network topology. The first path is a path from the destination node device to each neighbor of the destination node device in the old forwarding table. The second path uses each neighbor of the destination node device in the old forwarding table as a start point, and uses an edge node device indicated by a forwarding bit mask of each neighbor of the destination node device as an end point. Existence of the loop means that the second path travels through the destination node device.

In an example embodiment, the determining module is configured to: for any neighbor of the destination node device in the old forwarding table, determine whether a path, indicated by a forwarding bit mask of the any neighbor, of each edge node device in the changed network topology travels through the destination node device; and when a path of any edge node device in the changed network topology travels through the destination node device, determine that the loop exists on the packet forwarding path after the network topology changes; or when the path of each edge node device in the changed network topology does not travel through the destination node device, determine that no loop exists on the packet forwarding path after the network topology changes.

In an example embodiment, the determining module is configured to: establish a shortest path tree in the changed network topology by using each neighbor of the destination node device in the old forwarding table as a root; traverse identifiers of edge node devices that arrive on the shortest path tree through the destination node device, to obtain a bit string; perform an AND operation on the bit string and the forwarding bit mask of the neighbor of the destination node device; and when the result is 0, determine that no loop exists on the packet forwarding path after the network topology changes; or when the result is not 0, determine that the loop exists on the packet forwarding path after the network topology changes.

In an example embodiment, the forwarding module is configured to: before the timer expires, forward the BIER packet by using old multiple load balancing entries; the establishment module is configured to establish new multiple load balancing entries based on a quantity of load balancing paths; and the forwarding module is configured to: after the timer expires, switch a forwarding table of the multiple load balancing entries to the new multiple load balancing entries, and forward the BIER packet according to the new multiple load balancing entries.

A packet forwarding node device is further provided. The packet forwarding node device includes a memory and a processor. The memory stores at least one instruction, and the processor loads and executes the at least one instruction to implement any one of the foregoing packet forwarding methods.

A computer-readable storage medium is further provided. The storage medium stores at least one instruction, and a processor loads and executes the instruction to implement any one of the foregoing packet forwarding methods.

Another communications apparatus is provided. The apparatus includes a transceiver, a memory, and a processor. The transceiver, the memory, and the processor communicate with each other through an internal connection channel. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method in the first aspect or any one of possible implementations of the first aspect.

In an example embodiment, there are one or more processors, and there are one or more memories.

In an example embodiment, the memory may be integrated with the processor, or the memory and the processor are disposed separately.

In a specific implementation process, the memory may be a non-transitory (non-transitory) memory, such as a read-only memory (read only memory, ROM). The memory and the processor may be integrated into one chip, or may be disposed in different chips. A type of the memory and a manner in which the memory and the processor are disposed are not limited in this embodiment of this application.

A computer program (product) is provided. The computer program (product) includes computer program code. When the computer program code is run on a computer, the computer is enabled to perform the methods in the foregoing aspects.

A chip is provided. The chip includes a processor, configured to invoke and run instructions stored in a memory, so that a communications device on which the chip is installed performs the methods in the foregoing aspects.

Another chip is provided, including an input interface, an output interface, a processor, and a memory. The input interface, the output interface, the processor, and the memory are connected to each other through an internal connection channel. The processor is configured to execute code in the memory. When the code is executed, the processor is configured to perform the methods in the foregoing aspects.

### BRIEF DESCRIPTION OF DRAWINGS

FIG. 1 is a schematic diagram of a structure of a network topology according to an embodiment of this application;
FIG. 2 is a schematic diagram of a structure of a BIER header according to an embodiment of this application;

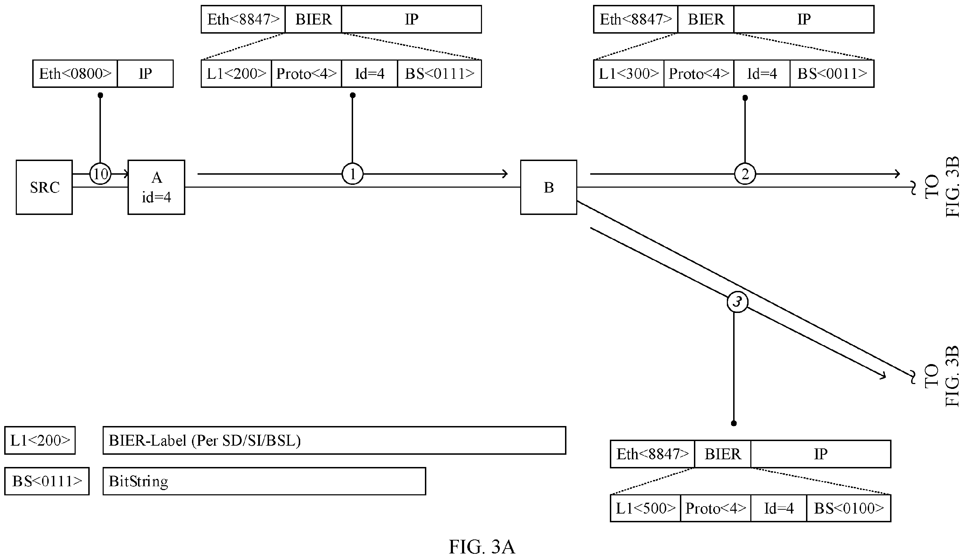

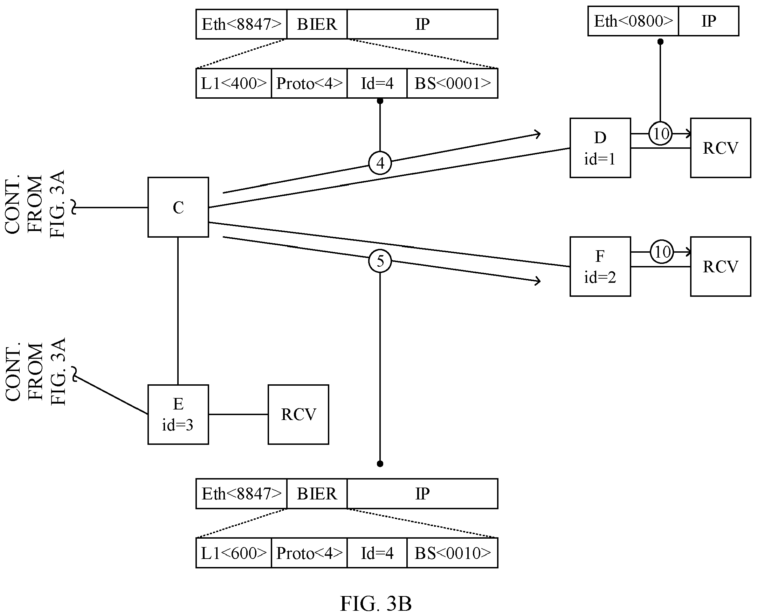

FIG. 3A and FIG. 3B are a schematic diagram of BIER-MPLS encapsulation and forwarding according to an embodiment of this application;
FIG. 4 is a schematic diagram of a structure of a network topology according to an embodiment of this application;
FIG. 5 is a flowchart of a packet forwarding method according to an embodiment of this application;
FIG. 6 is a schematic diagram of a structure of a network topology according to an embodiment of this application;
FIG. 7 is a schematic diagram of a structure of a network topology according to an embodiment of this application;
FIG. 8 is a schematic diagram of a structure of a network topology according to an embodiment of this application;
FIG. 9 is a schematic diagram of a structure of a packet forwarding node device according to an embodiment of this application;
FIG. 10 is a schematic diagram of a structure of a packet forwarding node device according to an embodiment of this application; and
FIG. 11 is a schematic diagram of a structure of a packet forwarding node device according to an embodiment of this application.

### DESCRIPTION OF EMBODIMENTS

Terms used in implementations of this application are merely intended to explain specific embodiments of this application, and are not intended to limit this application.

A BIER technology is a multicast technology. In the BIER technology, a BFR-id is configured for each edge node device on a network, for example, the BFR-id is a value ranging from 1 to 256. Configuration information of each edge node on the network is flooded on the network through IGP flooding. The information flooded along with IGP is referred to as BIER information. After flooding, each node on the network can determine a device that is identified by each BFR-id.

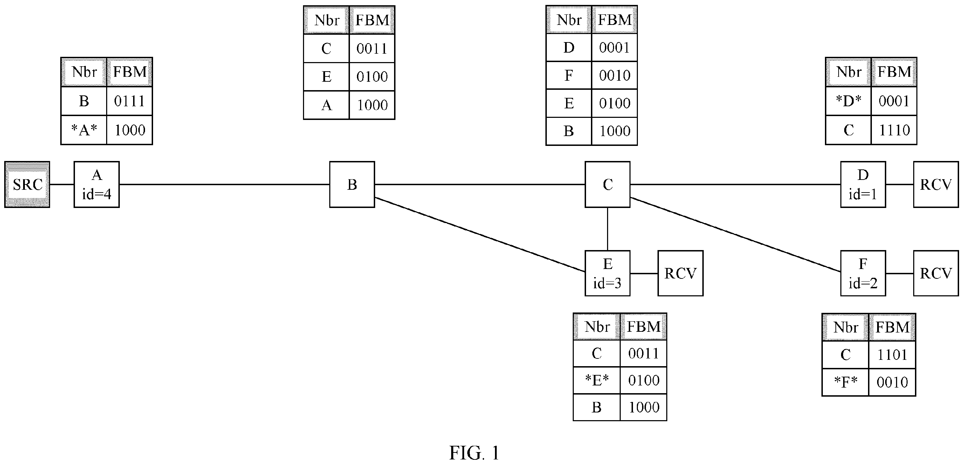

FIG. 1 is a schematic diagram of a network in which BIER information is flooded through the IGP. Edge node devices on the network include A, D, E, and F. As shown in FIG. 1, BFR-id values configured for the edge node devices A, D, E, and F are 4, 1, 2, and 3 respectively. The BFR-id value of each edge node is flooded through the IGP. For example, each edge node device sends a control plane packet to another node device on the network. The control plane packet includes flooding information, and the flooding information includes a BFR-id of the edge node device, and further includes an internet protocol (internet protocol, IP) address, and encapsulation information. The encapsulation information includes an encapsulation type. For example, flooding information of the edge node device A carries a BFR-id, an IP address, and an encapsulation type that are of the edge node device A, and an MPLS label allocated to the corresponding edge node device A, where the encapsulation type is multiprotocol label switching (multi-protocol label switching, MPLS). Nodes B and C are intermediate nodes, and no BFR-id needs to be configured for them. Therefore, a BFR-id in flooding information of control plane packets sent by the nodes B and C is accordingly set to 0. The flooding information in the control plane packets of the nodes B and C further includes other information such as an IP address and encapsulation information of the nodes.

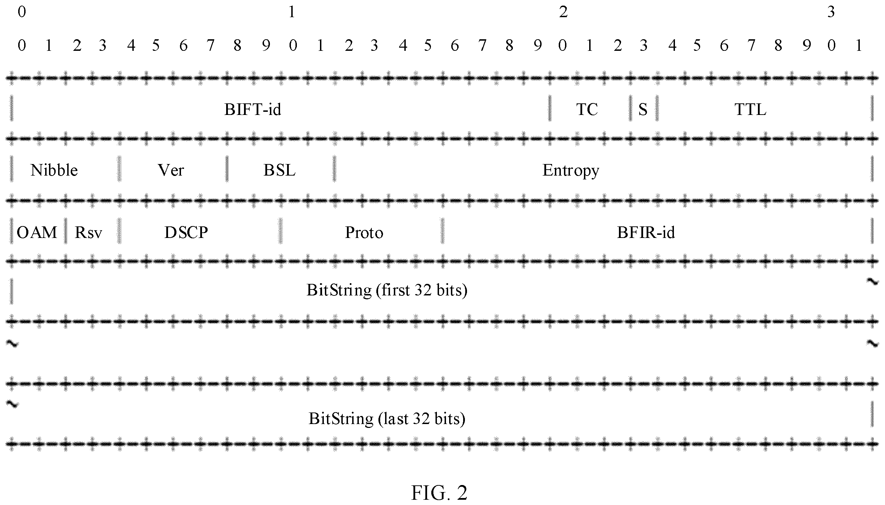

In addition, each node on the network establishes a forwarding table based on information flooded by a control plane over IGP, and each node may forward a BIER packet on a forwarding plane by using the forwarding table. The BIER packet includes a BIER encapsulated multicast data packet. For a BIER encapsulation format, refer to descriptions of a BIER header format in a request for comment (request for comment, RFC) 8296. The BIER header format is a key to implementing BIER on the forwarding plane (chip). As shown in FIG. 2, a BIER header includes a 32-bit (4 bytes) BIER-Label (label) or BIER forwarding table identifier (bit indexed forwarding table identifier, BIFT-ID) value. The first 20 bits are the label value or the BIFT-ID value, and the last 12 bits are other information of the label, including a communication traffic class (traffic class, TC), an S bit, and time to live (time to live, TTL). The BIER header further includes other 64-bit (8 bytes) fields, including a discriminator (Nibble), a version (Ver), a bit string length (bits length, BSL), an entropy (Entropy), detection (OAM), reservation (Rsv), a differentiated services field code point (differentiated services field codepoints, DSCP), a protocol (Proto), and a BIER forwarding ingress router identifier (BIER forwarding ingress router, BFIR-id), and further includes a bit string (BitString). A length of the BitString may be 64 bits, 128 bits, 256 bits, and the like. The BIER-Label or BFR-ID value may be used to determine the length of the BitString.

Each bit in the BitString field is used to identify a BIER forwarding egress router (BIER forwarding edge router, BFER). For example, a least significant (rightmost) bit of the BitString is used to identify that a next-hop node is a node whose BFR-id is 1. The second bit to the right of the BitString is used to identify a node whose BFR-id is 2. Forwarding by the forwarding plane is based on a forwarding entry. The forwarding entry determines, based on a BitString in a BIER packet, to which next hop or which next hops the BIER packet is to be sent. If a plurality of bits correspond to a same next hop, only one BIER packet is sent to the next hop.

For example, nodes in FIG. 1 establish a BIER forwarding table. A neighbor in the forwarding table may be a directly connected neighbor in a network topology, or may be an indirectly connected neighbor, for example, an indirectly connected neighbor calculated according to section 6.9 of RFC 8279. Neighbors of the edge node device A include the node B. In the network topology shown in FIG. 1, because next hops of BFER nodes whose BFR-id is 1/2/3 are all the node B, a neighbor entry of the edge node device A is established.

Neighbor (Nbr) = B, and forwarding bit mask (forwarding bit mask, FBM) = 0111.

Each bit in the FBM indicates one edge node device. If there are a large number of edge node devices, the edge node devices may be divided into different sets (sets). For a plurality of sets, the FBM includes bit strings of the plurality of sets. For example, there are 512 edge node devices in the network topology. The 512 edge node devices are divided into two sets: a set 0 and a set 1. One set uses a 256-bit bit string. In this case, an FBM of a neighbor may include two 256-bit bit strings: a bit string corresponding to the set 0 and a bit string corresponding to the set 1.

For the neighbor entry of the edge node device A, when the first bit, the second bit, and third bit to the right of the BitString in the BIER packet are 1, the edge node device A sends the BIER packet to the neighboring node B. When the fourth bit to the right of the BitString in the BIER packet is 1 (for example, a BIER packet sent from the node B to the node A), the entry indicates to send the BIER packet to the node A. In FIG. 1, an ^{∗}A^{∗} identifier indicates to send the BIER packet to the node A.

For the node B, neighbors of the node B include the edge node device A, the node C, and the edge node device E. Next hops of BFER nodes whose BFR-id is 1/2 are both the node C, a BFER node whose BFR-id is 3 is the edge node device E, and a BFER node whose BFR-id is 4 is the edge node device A. A neighbor entry of the node B is established as follows:
Nbr = C, FBM = 0011
Nbr = E, FBM = 0100
Nbr = A, FBM = 1000

For the node C, neighboring nodes of the node C include the node B, the edge node device E, the edge node device F, and the edge node device D. A BFER node whose BFR-id is 1 is the edge node device D, a BFER node whose BFR-id is 2 is the edge node device F, and a BFER node whose BFR-id is 3 is the edge node device E, and a next hop of a BFER node whose BFR-id is 4 is the node B. A neighbor entry of the node C is established as follows:
Nbr = D, FBM = 0001
Nbr = F, FBM = 0010
Nbr = E, FBM = 0100
Nbr = B, FBM = 1000

For the edge node device D, neighboring nodes of the edge node device D include the node C. A next hop of a BFER node whose BFR-id is 2/3/4 is the node C. A neighbor entry of the edge node device D is established as follows:
Nbr = C, FBM = 1110

For the edge node device E, neighboring nodes of the edge node device E include the node B and the node C. A next hop of a BFER node whose BFR-id is 1/2 is the node C, and a next hop of a BFER node whose BFR-id is 4 is the node B. A neighbor entry of the edge node device E is established as follows:
Nbr = B, FBM = 1000
Nbr = C, FBM = 0011

For the edge node device F, neighboring nodes of the edge node device F include the node C. A next hop of a BFER node whose BFR-id is 1/3/4 is the node C. A neighbor entry of the edge node device F is established as follows:
Nbr = C, FBM = 1101

On the network shown in FIG. 1, a node that receives the BIER packet removes the BIER header and forwards the packet as the original multicast packet. A packet forwarding process is as follows:

After receiving a multicast internet protocol (internet protocol, IP) packet, the node A encapsulates the BIER header. For example, in FIG. 1, a BitString in the BIER header encapsulated by the node A is 0111. Then, the node A forwards the packet according to Nbr = B and FBM = 0111 in the BIER forwarding table. According to the forwarding table, the BIER packet is sent to the neighboring node B. After receiving the BIER packet, the node B determines, according to the BitString being 0111, that the BIER packet needs to be respectively sent to two neighbors, that is, the node C and the node E. When sending the packet to the node C, the node B performs an AND (AND) operation on the BitString in the BIER packet and an FBM field of an Nbr = C entry in the forwarding table. As shown in FIG. 1, the BitString is 0111 in the BIER packet received by the node B, and the FBM field of the Nbr = C entry is 0011 in the forwarding table of the node B, and an AND result is 0011. The node B changes the BitString in the BIER packet to 0011 and sends the BIER packet to the node C. Similarly, when sending the BIER packet to the node E, the node B changes the BitString in the BIER packet to 0100 and then sends the BIER packet. After receiving the BIER packet, the node E determines, according to BitString being 0100 in the BIER packet, that the BIER packet needs to be sent to the node E (itself). Therefore, the node E decapsulates the BIER header, and then forwards the BIER packet according to an inner IP packet. For example, the inner IP packet may be sent to a multicast receiver (multicast receiver, RCV) of the node E in FIG. 1. After receiving the BIER packet sent by the node B, the node C determines, according to the BitString being 0011, that the BIER packet needs to be sent to the node D and the node F. The node C changes the BitString in the BIER packet to 0001 and sends the BIER packet to the node D. The node D decapsulates the BIER header and forwards the packet according to the inner IP packet. For example, the node D sends the BIER packet to an RCV of the node D in FIG. 1. The node C changes the BitString in the BIER packet to 0010 and sends the BIER packet to the node F. The node F decapsulates the BIER header and forwards the packet according to the inner IP packet. For example, the BIER packet is sent to an RSV of the node F.

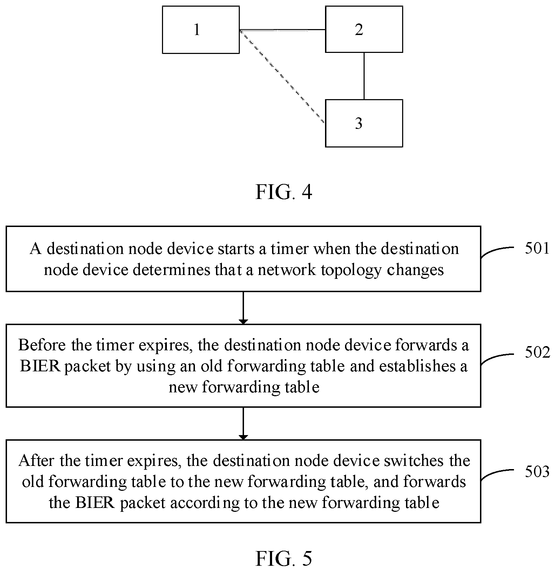

However, in the foregoing process of establishing the forwarding table and forwarding the BIER packet according to the forwarding table, if a link is added to the network and the network topology changes, a packet loss or excess packets occurs or occur in the process of the BIER packet forwarding. For example, a link between a node 1 and a node 3 is added in the network topology shown in FIG. 4. In a state before the link between the node 1 and the node 3 is added, a BIER forwarding table of the node 1 is as follows:
{(Nbr = Node 1(Self), FBM = 0001),
(Nbr = Node 2, FBM = 0110)}

In a final state after the link between the node 1 and the node 3 is added, the BIER forwarding table of the node 1 is as follows:
{(Nbr = Node 1(Self), FBM = 0001),
(Nbr = Node 2, FBM = 0010),
(Nbr = Node 3, FBM = 0100)}

Because a path of the node3 switches from the original Nbr = Node 2 to Nbr = Node 3, FBM fields of Nbr = Node2 and Nbr = Node 3 entries need to be updated. Updating the two entries is not an atomic operation and the two entries are sequentially updated. For example, in a process of reaching the final state, the FBM field of the Nbr = Node2 entry may be first updated to 0010, and then the Nbr = Node3 entry is added. In this case, a packet sent to the node 3 may be lost before the Nbr = Node 3 entry is added. Alternatively, in the process of reaching the final state, the Nbr = Node 3 entry may be first added, and then the FBM field of the Nbr = Node2 entry may be updated to 0010. In this case, a packet sent to the node 3 may be repeated.

For the packet loss or excess packets occurring when the link is added to the network topology in FIG. 4, an embodiment of this application provides a packet forwarding method. In this method, before a forwarding path is switched to a path corresponding to a new forwarding table, the BIER packet is first forwarded according to the old forwarding path. After the new forwarding table is established, an old forwarding table is changed to the new forwarding table, and then the old forwarding table is deleted. In other words, a make before break (make before break, MBB) manner is used in this embodiment of this application, to avoid or reduce a packet loss or repeated packets. Refer to FIG. 5. The method provided in this embodiment of this application includes the following steps.

### Step 501: When a destination node device determines that a network topology changes, the destination node device starts a timer.

A network topology change includes a case in which a new link is added. The case in which a new link is added is not limited in this embodiment of this application. For example, the added link may be a link that is previously disconnected due to a fault and then recovered. Also refer to the network topology shown in FIG. 4. There is a link between the node 1 and the node 3, but the link between the node 1 and the node 3 is disconnected due to a fault. After the link fault between the node 1 and the node 3 is rectified, the network topology changes. The link between the node 1 and the node 3 is added because the link fault between the node 1 and the node 3 is rectified.

In addition to the foregoing case in which the link is added because the link fault is rectified, there is a case in which a new link is added after a router is added to the network. The network topology shown in FIG. 4 is still used as an example. For example, if a node 4 is added and a connection is established between the node 4 and the node 1, a link between the node 1 and the node 4 is added.

In this embodiment of this application, BIER MBB may be enabled for a node on a network. In other words, the destination node device in this method may be any node that is in the changed network topology after the link is added and for which BIER MBB is configured. For example, the destination node device uses a BIER protocol, and has a BIER forwarding capability and a forwarding capability of specific BIER encapsulation types, for example, MPLS encapsulation, ethernet (Ethernet) encapsulation, or internet protocol version 6 (internet protocol version 6, IPv6) encapsulation. A specific encapsulation type for BIER forwarding is not limited in this embodiment of this application. In addition, the destination node device in this embodiment of this application may be a router or a switch.

In the method provided in this embodiment of this application, a network administrator enables BIER MBB for the destination node device, so that the destination node device has a BIER MBB function. In addition, the timer indicates that establishment of a new forwarding table is completed before the timer expires. For example, in addition to enabling BIER MBB for the destination node device, the network administrator may further configure timing duration of the timer. The timing duration of the timer may be configured based on a capability of the destination node device, for example, based on a central processing unit (central processing unit, CPU) load of the destination node device, or may be configured based on experience. A same timing duration or different timing durations of timers may be configured for different destination node devices. This is not limited in this embodiment of this application, provided that it can be ensured that establishment of the new forwarding table is completed.

### Step 502: Before the timer expires, the destination node device forwards a BIER packet by using an old forwarding table and establishes the new forwarding table.

The old forwarding table is a forwarding table used by the destination node device before the network topology changes. The new forwarding table is a forwarding table established by the destination node device based on the changed network topology. After the network topology changes, if the destination node device receives the BIER packet before the timer expires, the destination node device forwards the BIER packet by using the old forwarding table, and establishes the new forwarding table.

It should be noted that, when the network topology changes, the new forwarding table may be established before or after the timer is started, or the new forwarding table may be established when the timer is started. Because the timer indicates that establishment of the new forwarding table is completed before the timer expires, if the new forwarding table is established before the timer is started, the timing duration of the timer is less than establishment duration of the new forwarding table. If the new forwarding table is established after the timer is started, the timing duration of the timer is greater than the establishment duration of the new forwarding table. If the new forwarding table is established when the timer is started, the timing duration of the timer may be equal to the establishment duration of the new forwarding table. The establishment duration of the new forwarding table is a length of time between a moment at which the new forwarding table starts to be established and a moment at which establishment of the new forwarding table is completed.

Because the link is added, the BIER packet sent by the destination node device to the destination node according to the original forwarding path may be sent back to the destination node device. In other words, if the BIER packet is forwarded according to the old forwarding table, a loop may exist on the packet forwarding path. As a result, link congestion or the like may occur. Therefore, whether a loop exists on the packet forwarding path needs to be determined before forwarding the BIER packet according to the old forwarding table. In an example embodiment, when the network topology changes, the method further includes: determining, based on the old forwarding table, whether a loop exists on the packet forwarding path after the network topology changes. In this embodiment, before the timer is started, the destination node device determines, according to the old forwarding table, that no loop exists on the packet forwarding path after the network topology changes. Then, before the timer expires, the destination node device forwards the BIER packet by using the old forwarding table and establishes the new forwarding table. When it is determined that no loop exists on the packet forwarding path after the network topology changes, before the timer expires, the old forwarding table is used to forward the BIER packet and the new forwarding table is established. This avoids link congestion caused by the loop that exists when the old forwarding table is used to forward the BIER packet.

A manner of determining, based on the old forwarding table, whether the loop exists on the packet forwarding path after the network topology changes includes but is not limited to the following two manners:

**Manner 1:** For any neighbor of the destination node device in the old forwarding table, the destination node device determines whether a path, indicated by a forwarding bit mask of the any neighbor, of each edge node device in the changed network topology travels through the destination node device. When a path of any edge node device in the changed network topology travels through the destination node device, the destination node device determines that the loop exists on the packet forwarding path after the network topology changes. When the path of each edge node device in the changed network topology does not travel through the destination node device, the destination node device determines that no loop exists on the packet forwarding path after the network topology changes.

The packet forwarding path includes a first path and a second path that is calculated based on the changed network topology. The first path is a path from the destination node device to each neighbor of the destination node device in the old forwarding table. The second path uses each neighbor of the destination node device in the old forwarding table as a start point, and uses an edge node device indicated by a forwarding bit mask of each neighbor of the destination node device as an end point. Existence of the loop means that the second path travels through the destination node device.

The node 1 in the network topology shown in FIG. 4 being the destination node device is used as an example. Because the link between the node 1 and the node 3 is added, and the node 1 detects a change in the network topology, the node 1 determines whether a loop exists on a packet forwarding path corresponding to a current BIER forwarding table due to the topology change. To be specific, the node 1 determines whether a path of each edge node device, indicated by an FBM field of each neighbor of the node 1 in the forwarding table, in the changed network topology travels through the node 1. In the old forwarding table, neighbors of the node 1 include the node 2, and a path from the node 1 to the node 2 is the first path. The second path uses the node 2 as a start point, and uses an edge node device indicated by a forwarding bit mask of the node 2 as an end point. If it is determined that the path of each edge node device, indicated by the FBM field of each neighbor of the node 1 in the forwarding table, in the changed network topology does not travel through the node 1, an MBB process is performed. To be specific, the current BIER forwarding table (bit indexed forwarding table, BIFT) 1 remains unchanged, and a BIER forwarding table BIFT 2 is added. The new forwarding table is set to be used for the packet forwarding path, the old forwarding table is changed to the new forwarding table, and the old forwarding table is deleted.

After the BIFT forwarding table is added, the new forwarding table may be set to be used for the forwarding path after a specific period of time. Because in a system, for example, the router, it takes time to complete a process of delivering the forwarding table, and the delivery process may be an asynchronous process. In other words, a delivery program does not check whether delivery is completed. For example, timing duration of the timer is 500 ms. When the timer expires, the new forwarding table is set for the forwarding path. After the timing duration of the timer is configured, timing of the timer may be started when the network topology change is detected.

For example, the current forwarding table BIFT 1 of the node1 is as follows:
{(Nbr = Node1(Self), FBM = 0001),
(Nbr = Node2, FBM = 0110)}

For a BFER node indicated by an FBM field of each Nbr node (excluding the node 1) of the node 1, the node 1 determines whether the packet forwarding path in the changed network topology travels through the node 1, in other words, from the neighbor to the node 1.

For example, determining may be performed according to a formula Distance(2_X) < Distance(2_1) + Distance(1_X) or D(2_X) < D(2_1) + D(1_X), where D(X_Y) indicates a path cost from a node X to a node Y.

Because a neighboring node of the node 1 is the node 2, FBM<0110> of Nbr<Node2> indicates the node 2 and the node 3, respectively. Determining is performed according to the foregoing formula as follows:
D(2_2) < D(2_1) + D(1_2)
D(2_3) < D(2_1) + D(1_3)

If links shown in FIG. 4 have a same cost (cost), the network topology shown in FIG. 4 satisfies all the foregoing formulas, and no loop exists in the current forwarding table BIFT 1 due to the topology change. Therefore, the node 1 may perform an MBB operation.

**Manner 2:** The destination node device establishes a shortest path tree in the changed network topology by using each neighbor of the destination node device in the old forwarding table as a root; traverses identifiers of edge node devices from the destination node device to edge node devices of the shortest path tree, to obtain a bit string; performs an AND operation on the bit string and the forwarding bit mask of the neighbor; and when a result is 0, determines that no loop exists on the packet forwarding path after the network topology changes; or when a result is not 0, determines that the loop exists on the packet forwarding path after the network topology changes.

For example, the SPT tree is established in the changed network topology by using each neighbor (for example, 2) of the node 1 in the old forwarding table of the node 1 as a root. BFR-ids of nodes from the node 1 to nodes of the SPT tree are traversed, to form a BitString (BitStringx). Then, the AND operation is performed on the BitString and the FBM (FBMx) of the neighbor, that is, (BSx AND FBMx). If the result is not 0, the loop exists.

For the network topology shown in FIG. 4, the forwarding table of the node 1 includes only one neighbor 2 whose FBMx is 110. In the changed network topology, the SPT tree travels through only the node 1, and the corresponding BitStringx is 001. BitStringx AND FBMx = 0. Therefore, no loop exists for the neighbor in the changed network topology.

### Step 503: After the timer expires, the destination node device switches the old forwarding table to the new forwarding table, and forwards the BIER packet according to the new forwarding table.

After the timer expires, the old forwarding table is switched to the new forwarding table, and the BIER packet is forwarded according to the new forwarding table. An atomic operation or a single-entry operation may be used in this process.

The network topology shown in FIG. 4 is still used as an example. For the received BIER packet, after receiving the BIER packet, the node 1 forwards the BIER packet to the node 2 and the node 3. When the node 1 determines, according to the old forwarding table, that no loop exists on the packet forwarding path after the network topology changes, the timer is started and the old forwarding table is used for a period of time. In other words, after the timer expires, the old forwarding table is switched to the new forwarding table, and then the old forwarding table is deleted. BIER MBB may be enabled for the node 1, the node 2, and the node 3 on the network. In this process, each node device performs determining and processing according to the foregoing operations performed by the node 1. The node 3 also performs determining and processing according to the foregoing process. The node 1 forwards the packet according to the old forwarding table and according to the new forwarding table as follows:
(1) The node 1 forwards the BIER packet according to the old forwarding table, in other words, according to an old forwarding path 1 -> 2 -> 3. The node 3 receives only the BitString (0100) in the BIER packet according to the operations of the node devices in the foregoing packet forwarding process. Regardless of whether the node 3 forwards the BIER packet according to the old forwarding path or the new forwarding path, a result of forwarding the BIER packet is not affected. In other words, no packet loss occurs in the BIER packet received by the node 3 from the node 1.
(2) The node 1 forwards the BIER packet according to the new forwarding table, in other words, according to a new forwarding path 1 -> 2 or 3. The node 3 receives also only the BitString (0100) in the BIER packet. Regardless of whether the node 3 forwards the BIER packet according to the old forwarding path or the new forwarding path, a result of forwarding the BIER packet is not affected. In other words, no packet loss occurs in the BIER packet received by the node 3 from the node 1.

According to the method provided in this embodiment of this application, the timer is started when the network topology changes. Before the timer expires, the BIER packet is forwarded by using the old forwarding table and the new forwarding table is established. After the timer expires, the old forwarding table is switched to the new forwarding table. The new forwarding table is used to forward the BIER packet. This avoids or reduces a packet loss and excess packets. In addition, the timer is started only when it is determined, according to the old forwarding table, that no loop exists on the packet forwarding path after the network topology changes. This avoids link congestion caused when the loop exists, improves reliability of packet forwarding, and further reduces a probability of a packet loss or excess packets.

It should be noted that, the foregoing description is provided only for a case in which the destination node device determines, according to the old forwarding table, that no loop exists on the packet forwarding path after the network topology changes. If the loop exists, the method provided in this embodiment of this application includes but is not limited to the following two processing manners:

Processing manner 1: When the network topology changes, the method further includes: when determining, according to the old forwarding table, that the loop exists on the packet forwarding path after the network topology changes, the destination node device does not start the timer, and establishes the new forwarding table. After establishment of the new forwarding table is completed, the destination node device switches the old forwarding table to the new forwarding table, and forwards the BIER packet according to the new forwarding table.

In this manner, the foregoing manner of determining, according to the old forwarding table, whether the loop exists on the packet forwarding path after the network topology changes is used. When it is determined, according to the old forwarding table, that the loop exists on the path forwarding path after the network topology changes, the timer is not started, and the new forwarding table is directly established. After establishment of the new forwarding table is completed, the old forwarding table is switched to the new forwarding table, and the BIER packet is forwarded according to the new forwarding table.

**Processing manner 2:** When the network topology changes, the method further includes: when determining, according to the old forwarding table, that the loop exists on the packet forwarding path after the network topology changes, the destination node device does not start the timer. The destination node device updates the old forwarding table based on the changed network topology, and forwards the BIER packet according to the updated forwarding table.

In this manner, the foregoing manner of determining, according to the old forwarding table, whether the loop exists on the packet forwarding path after the network topology changes is used. When it is determined, according to the old forwarding table, that the loop exists on the packet forwarding path after the network topology changes, the timer is not started, and the new forwarding table is not established. Instead, the old forwarding table is updated based on the changed network topology, and the packet is forwarded according to the updated forwarding table.

In the foregoing processing manner 1 and processing manner 2, the packet forwarding path includes the first path and the second path that is calculated based on the changed network topology. The first path is a path from the destination node device to each neighbor of the destination node device in the old forwarding table. The second path uses each neighbor of the destination node device in the old forwarding table as a start point, and uses an edge node device indicated by a forwarding bit mask of each neighbor of the destination node device as an end point. Existence of the loop means that the second path travels through the destination node device.

Because the loop causes link congestion or the like, when it is determined that the loop exists, the timer is not started, to avoid or reduce link congestion.

For ease of understanding the method provided in this embodiment of this application, the following describes by using several different scenarios other than the scenario shown in FIG. 4 as an example.

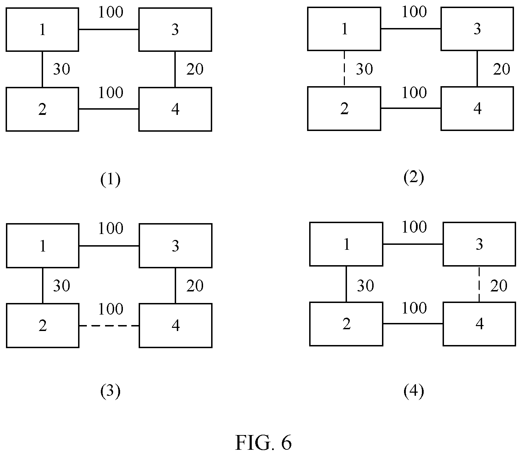

**Scenario 1:** Four devices are deployed on a network. FIG. 6 (1) shows a topology structure after links are added and costs of the links. In this scenario, there are a plurality of cases in which a link is added. A packet forwarding process for each link adding case is as follows:

**(1) A link is added between the node 1 and the node 2.**

As shown in FIG. 6 (2), the node 1 determines, according to the old forwarding table in the following determining manners, that no loop exists on the packet forwarding path after the network topology changes, and delays convergence. To be specific, before the timer expires, the node 1 continues to forward the BIER packet <1110> from the node 1 to the node 3. After the timer expires, the old forwarding table is switched to the new forwarding table, and the BIER packet is forwarded according to the new forwarding table.

Determining manner 1: All nodes whose FBM is <1110> from the neighboring node 3 to the neighboring node 3 do not include the node 1.

Determining manner 2: A new SPT tree is calculated for the neighboring node 3, where nodes corresponding to the FBM satisfy a formula D(3_X) < D(3_1) + D(1_X).

For example, traffic is received from the node 1 and sent to the node 2, 3, or 4. Convergence on the node 2 does not affect a packet forwarding result, because convergence on the node 2 affects only BFER = 1. When the BIER packet reaches the node 2, the BitString in the BIER packet does not include BFER = 1.

**(2) A link is added between the node 2 and the node 4.**

As shown in FIG. 6 (3), the node 2 determines, according to the old forwarding table in the following determining manners, that no loop exists on the packet forwarding path after the network topology changes, and delays convergence. To be specific, before the timer expires, the node 2 continues to forward the BIER packet <1101> from the node 2 to the node 1. After the timer expires, the old forwarding table is switched to the new forwarding table, and the BIER packet is forwarded according to the new forwarding table.

Determining manner 1: All nodes whose FBM is <1101> from the neighboring node 1 to the neighboring node 1 do not include the node 2.

Determining manner 2: A new SPT tree is calculated for the neighboring node 1, where nodes corresponding to the FBM <1101> satisfy a formula D(1_X) < D(1_2) + D(2_X).

For example, traffic is received from the node 2 and sent to the node 1, 3, or 4. Convergence on the node 3 does not affect a packet forwarding result, because convergence on the node 3 affects only BFER = 2. When the packet reaches the node 3, the BitString in the packet does not include BFER = 2. Similarly, convergence on the node 4 does not affect a packet forwarding result, because convergence on the node 4 affects only BFER = 2. When the packet reaches the node 4, the BitString in the packet does not include BFER = 2.

For example, traffic is received from the node 4 and sent to the node 1, 2, or 3. Because a packet <0010> that is sent to the node 3 is sent back, the node 4 determines, according to the old forwarding table and in the following determining manners, that the loop exists on the packet forwarding path after the network topology changes, and therefore does not delay convergence.

Determining manner 1: In all nodes of the BIER packet whose FBM is <0111> from the neighboring node 3 to the neighboring node 3, a packet whose BFR-id is 2 is sent to the node 4. Therefore, a condition that none of the nodes whose FBM is <0111> from the neighboring node 3 to the neighboring node 3 includes the node 4 is not satisfied.

Determining manner 2: A new SPT tree is calculated for the neighboring node 3, and BFR-id = 2 does not satisfy a formula D(3_2) < D(3_4) + D(4_2).

It should be noted that convergence of the BIER packet <0111> cannot be delayed, but convergence of the BIER packet <0101> in traffic is not affected. Only the BIER packet with BFR-id = 2 is affected.

**(3) A link is added between the node 3 and the node 4.**

As shown in FIG. 6 (4), the node 3 determines, according to the old forwarding table in the following determining manners, that the loop exists on the packet forwarding path after the network topology changes. Because the BIER packet <1000> that is sent to the node 1 is sent back, convergence is not delayed.

Determining manner 1: In all nodes of the BIER packet whose FBM is <1011> from the neighboring node 1 to the neighboring node 1, a packet whose BFR-id is 4 is sent to the node 3. Therefore, a condition that none of the nodes whose FBM is <1011> from the neighboring node 1 to the neighboring node 1 includes the node 3 is not satisfied.

Determining manner 2: A new SPT tree is calculated for the neighboring node 1, and BFR-id = 4 does not satisfy a formula D(1_4) < D(1_3) + D(3_4).

For example, traffic is received from the node 3. The node 3 determines, according to the old forwarding table, that the loop exists on the packet forwarding path after the network topology changes, and therefore does not start the timer. After establishment of the new forwarding table is completed, the node 3 immediately switches back to the new forwarding table or updates the old forwarding table. In this case, the MBB configured in this embodiment of this application is invalid.

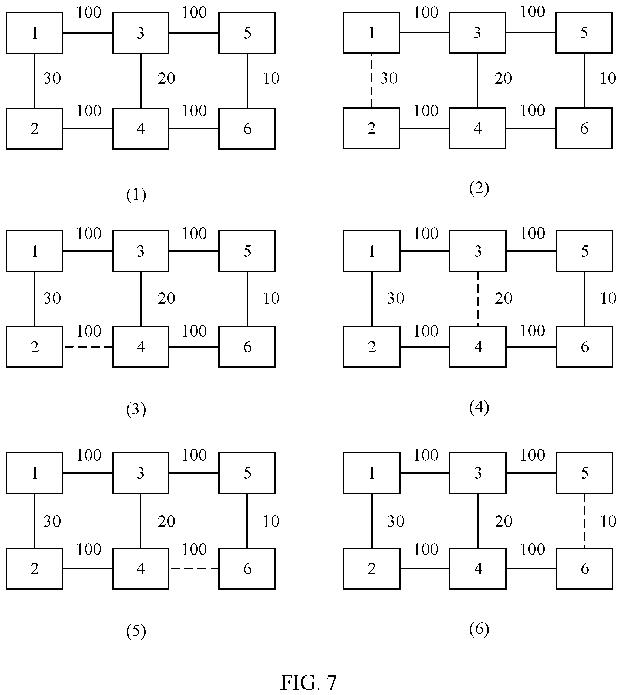

**Scenario 2:** Six devices are deployed on a network. FIG. 7 (1) shows a topology structure after links are added and costs of the links. In this scenario, there are a plurality of cases in which a link is added. A packet forwarding process for each link adding case is as follows:

**(1) A link is added between the node 1 and the node 2.**

As shown in FIG. 7 (2), the node 2 determines, according to the old forwarding table in the following determining manners, that no loop exists on the packet forwarding path after the network topology changes, and delays convergence. To be specific, before the timer expires, the node 2 continues to forward the BIER packet <111101> from the node 2 to the node 4. After the timer expires, the old forwarding table is switched to the new forwarding table, and the BIER packet is forwarded according to the new forwarding table.

Determining manner 1: All nodes whose FBM is <111101> from the neighboring node 4 to the neighboring node 4 do not include the node 2.

Determining manner 2: A new SPT tree is calculated for the neighboring node 1, where nodes corresponding to the FBM <111101> satisfy a formula D(4_X) < D(4_2) + D(2_X).

Convergence on the node 1 does not affect a packet forwarding result if BFER = 2. For example, traffic is received from the node 2. When a packet (BitString = 111101) is sent to the node 1, 3, 4, 5, or 6, no packet is lost.

**(2) A link is added between the node 2 and the node 4.**

As shown in FIG. 7 (3), the node 2 determines, according to the old forwarding table in the following determining manners, that no loop exists on the packet forwarding path after the network topology changes, and delays convergence. To be specific, before the timer expires, the node 2 continues to forward the BIER packet <111101> from the node 2 to the node 1. After the timer expires, the old forwarding table is switched to the new forwarding table, and the BIER packet is forwarded according to the new forwarding table.

Determining manner 1: All nodes whose FBM is <111101> from the neighboring node 1 to the neighboring node 1 do not include the node 2.

Determining manner 2: A new SPT tree is calculated for the neighboring node 1, where nodes corresponding to the FBM <111101> satisfy a formula D(1_X) < D(1_2) + D(2_X).

Convergence on the node 4 does not affect a packet forwarding result if BFER = 2. Because the node whose BFER = 2 includes the node 4, the node 4 determines, according to the old forwarding table, that the loop exists on the packet forwarding path after the network topology changes.

For example, traffic is received from the node 2. Convergence on the node 4 affects only BFER = 2. When the BIER packet reaches the node 4, the BitString in the BIER packet does not include BFER = 2. According to the method provided in this embodiment of this application, no packet is lost.

**(3) A link is added between the node 3 and the node 4.**

As shown in FIG. 7 (4), in an example in which traffic is received from the node 2, forwarding paths include 2 -> 1 -> 3 and 2 -> 4 -> 6 -> 5. The link between the node 3 and the node 4 is added:

For processing of the node 2, the original neighboring node 1 takes over 1 or 3, and the neighboring node 4 takes over 2, 4, 6, or 5. All nodes whose FBM is <000101> from the neighboring node 1 to the neighboring node 1 do not include the node 2. All nodes whose FBM is <111000> from the neighboring node 4 to the neighboring node 4 do not include the node 2. Therefore, no loop exists on the packet forwarding path after the network topology changes, and convergence can be delayed.

For processing of the node 3, two neighboring nodes are changed to three neighboring nodes. Because the node whose BFER = 4 includes the node 3, the loop exists on the packet forwarding path. However, a convergence process of the node 3 does not affect the BIER packet sent from the node 2 to the node 3.

For processing of the node 4, two neighboring nodes are changed to three neighboring nodes. Because the node whose BFER = 3 includes the node 4, the loop exists on the packet forwarding path. However, a convergence process of the node 4 does not affect the BIER packet sent from node 2 to node 4.

**(4) A link is added between the node 4 and the node 6.**

As shown in FIG. 7 (5), in an example in which traffic is received from the node 2, forwarding paths include 2 -> 1 and 2 -> 4 -> 3 -> 5 -> 6. The link between the node 4 and the node 6 is added:

For processing of the node 2, the original neighboring node 1 takes over 1 and the neighboring node 4 takes over 3, 4, 5, or 6. All nodes whose FBM is <000001> from the neighboring node 1 to the neighboring node 1 do not include the node 2. All nodes whose FBM is <111101> from the neighboring node 4 to the neighboring node 4 do not include the node 2. Therefore, no loop exists on the packet forwarding path (the FBMs of the two neighboring nodes remain unchanged), and convergence can be delayed.

For processing of the node 4, two neighboring nodes are changed to three neighboring nodes. No loop exists on the packet forwarding path, and convergence can be delayed.

For processing of the node 6, one neighboring node is changed to two neighboring nodes. Because BFER = 4, the loop exists and convergence is not delayed. However, a convergence process does not affect the BIER packet sent from the node 2 to the node 6.

In an example in which traffic is received from the node 1, forwarding paths include 1 -> 2, 1 -> 3 -> 4 or 5, and 5 -> 6. When the link between the node 4 and the node 6 is added:

For processing of the node 1, the original neighboring node 2 takes over 2 and the neighboring node 3 takes over 3, 4, 5, or 6. The FBMs of the two neighboring nodes remain unchanged, no loop exists on the packet forwarding path, and convergence can be delayed.

In the foregoing process, no packet loss exists in the entire traffic sent from the node 1 to the node 2, 3, 4, 5, or 6.

**(5) A link is added between the node 5 and the node 6.**

As shown in FIG. 7 (6), in an example in which traffic is received from the node 2, forwarding paths include 2 -> 1, 2 -> 4 -> 3 or 6, and 3 -> 5. The link between the node 5 and the node 6 is added:

For processing of the node 5, one neighboring node is changed to two neighboring nodes. Because BFER = 6, the loop exists on the packet forwarding path and convergence is not delayed.

For processing of the node 6, one neighboring node is changed to two neighboring nodes. Because BFER = 5, the loop exists on the packet forwarding path and convergence is not delayed. However, a convergence process does not affect the packet and no packet is lost.

For processing of the node 2, the original neighboring node 1 takes over 1 and the neighboring node 4 takes over 3, 4, 5, or 6. All nodes whose FBM is <000001> from the neighboring node 1 to the neighboring node 1 do not include the node 2. All nodes whose FBM is <111101> from the neighboring node 4 to the neighboring node 4 do not include the node 2. Therefore, the FBMs of the two neighboring nodes remain unchanged, no loop exists on the packet forwarding path, and convergence can be delayed.

In the foregoing process, no packet is lost when the link is added.

Moreover, in addition to the foregoing several scenarios, the method provided in this embodiment is also applicable to a load balancing scenario. In the load balancing scenario, before the timer expires, that the destination node device forwards a BIER packet by using an old forwarding table and establishes the new forwarding table includes: Before the timer expires, the destination node device forwards the BIER packet by using old multiple load balancing entries, and establishes new multiple load balancing entries based on a quantity of load balancing paths.

Correspondingly, after the timer expires, that the destination node device switches the old forwarding table to the new forwarding table, and forwards the BIER packet according to the new forwarding table includes: After the timer expires, the destination node device switches a forwarding table of the multiple load balancing entries to the new multiple load balancing entries, and forwards the packet according to the new multiple load balancing entries.

In the foregoing case of multiple forwarding entries, principles of the packet forwarding process are the same as those of the method procedure shown in FIG. 5. Details are not described herein again. For ease of understanding, the following uses the load balancing scenario in scenario 3 as an example to describe the packet forwarding process.

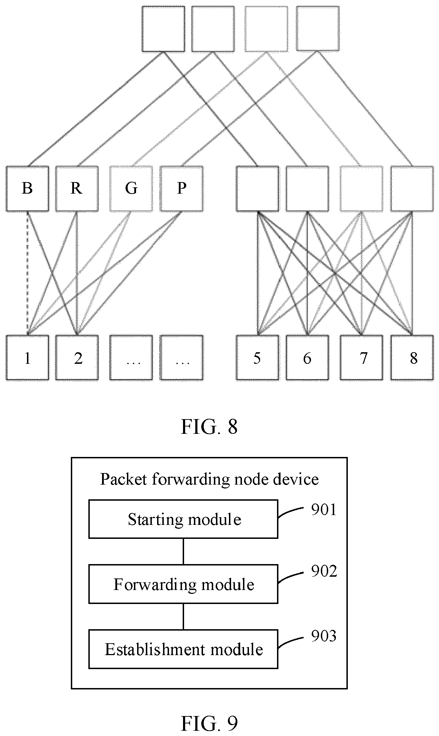

**Scenario 3:** Load balancing links are deployed on a network. FIG. 8 shows a topology structure after links are added. In this topology structure, the links have same costs. Nodes 1, 2, 5, 6, 7, and 8 are BFER nodes, and respectively correspond to BFR-ids 1, 2, 5, 6, 7, and 8. If there is no fault, there are four paths from the node 1 to all other BFER nodes: a path passing through a neighbor B, a path passing through a neighbor R, a path passing through a neighbor G, and a path passing through a neighbor P. For example, a link between the node 1 and the node B recovers after a fault, and a quantity of paths from the node 1 to each BFER node changes from three to four.

In this embodiment, load balancing (RFC 8279) that is performed on a plurality of entries using the BIER is configured for the node 1. Four load balancing entries are configured. In other words, a quantity of paths for load balancing is 4. A load balancing table is as follows, where an entry of a neighbor being a node itself is omitted.
BIFT 1: { (Nbr=R, FBM=1111 0010) }
BIFT 2: { (Nbr=G, FBM=1111 0010) }
BIFT 3: { (Nbr=P, FBM=1111 0010) }
BIFT 4: { (Nbr=R, FBM=1111 0010) }

For example, there are currently 400 multicast flows, and there are 100 multicast flows in each BIFT table. 200 multicast flows travel through the neighbor R, 100 multicast flows travel through the neighbor G, and 100 multicast flows travel through the neighbor P. After a link is added, the foregoing entries may be changed as follows:
BIFT 1: { (Nbr=B, FBM=1111 0010) }
BIFT 2: { (Nbr=R, FBM=1111 0010) }
BIFT 3: { (Nbr=G, FBM=1111 0010) }
BIFT 4: { (Nbr=P, FBM=1111 0010) }

It can be learned that each BIFT table is changed. Nbr = R is changed to Nbr = B in a BIFT 1. Nbr = G is changed to Nbr = R in a BIFT 2. Nbr = P is changed to Nbr = G in a BIFT 3. Nbr = R is changed to Nbr = P in a BIFT 4.

In this case, adding a link may cause a packet loss or excess packets. For example, if the BIFT table is directly updated after a link fault occurs, for the BIFT 1, an Nbr = R entry may be first deleted and an Nbr = B entry is added. In this case, a flow is interrupted. If an Nbr = B entry is first added and an Nbr = R entry is added, there are excess packets. For the first problem, for example, in a case of forwarding of the BIFT 1, a new entry in a BIFT 1' is first established. After a specific period of time, in other words, after the timer expires, a forwarding entry is changed to the entry in the BIFT 1', so that no packet is lost.

To resolve the foregoing problem, in the method provided in this embodiment of this application, BIER MBB is enabled for each node, and timing duration of the timer is configured. As shown in FIG. 8, a link (from the node 1 to the node B) is added. In an example in which traffic is received from the node 1, the node 1 determines whether a loop exists in the following manner:

For a current entry in the BIFT 1, none of the nodes whose FBM is <11110010> from the neighboring node R to the neighboring node R includes the node 1. For a current entry in the BIFT 2, none of the nodes whose FBM is <11110010> from the neighboring node G to the neighboring node G include the node 1. For a current entry in the BIFT 3, none of the nodes whose FBM is <11110010> from the neighboring node P to the neighboring node P include the node 1. For a current entry in the BIFT 4, none of the nodes whose FBM is <11110010> from the neighboring node R to the neighboring node R include the node 1.

If all the foregoing conditions are satisfied, it indicates that the four original load balancing entries can continue to be forwarded on an original path. Therefore, the timer can be started.

For example, before the timer expires, new multiple load balancing entries are generated. For example, initially the following multiple table load balancing index is used, namely, a multiple BIER forwarding table index (multiple BIFT index, MBI), for example, an MBI 1.

Multiple table load balancing index: MBI1 = {BIFT 1, BIFT 2, BIFT 3, BIFT4}

A BIER forwarding table is as follows:
BIFT 1: { (Nbr=R, FBM=1111 0010) }
BIFT 2: { (Nbr=G, FBM=1111 0010) }
BIFT 3: { (Nbr=P, FBM=1111 0010) }
BIFT 4: { (Nbr=R, FBM=1111 0010) }

A multiple table load balancing index table and a corresponding forwarding table are added during timing of the timer.
MBI2 = {BIFT 21, BIFT 22, BIFT 23, BIFT24}
BIFT 21: { (Nbr=B, FBM=1111 0010) }
BIFT 22: { (Nbr=R, FBM=1111 0010) }
BIFT 23: { (Nbr=G, FBM=1111 0010) }
BIFT 24: { (Nbr=P, FBM=1111 0010) }

After the timer expires, the forwarding table is changed to: multiple table load balancing index = MBI 2.

In this method, whether the loop exists on the packet forwarding path in the BIFTs 1, 2, 3, and 4 after the network topology changes needs to be determined. If no loop exists, the new multiple load balancing entries are used.

In conclusion, according to the method provided in this embodiment of this application, when the link is added, the BIER packet is forwarded by using the old multiple load balancing entries before the timer expires, and the new multiple load balancing entries are established based on the quantity of load balancing paths. After the timer expires, the old multiple load balancing entries are switched to the new multiple load balancing entries, and the BIER packet is forwarded by using the new multiple load balancing entries. This avoids or reduces a packet loss and excess packets.

An embodiment of this application provides a packet forwarding node device. The packet forwarding node device is configured to forward a BIER packet. Refer to FIG. 9. The packet forwarding node device includes:
a starting module 901, configured to start a timer when it is determined that a network topology changes;
a forwarding module 902, configured to: before the timer expires, forward the BIER packet by using an old forwarding table, where the old forwarding table is a forwarding table used by the packet forwarding node device before the network topology changes; and
an establishment module 903, configured to: before the timer expires, establish a new forwarding table, where the new forwarding table is a forwarding table established by the packet forwarding node device based on the changed network topology, and the timer indicates that establishment of the new forwarding table is completed before the timer expires.

The forwarding module 902 is further configured to: after the timer expires, switch the old forwarding table to the new forwarding table, and forward the BIER packet according to the new forwarding table.

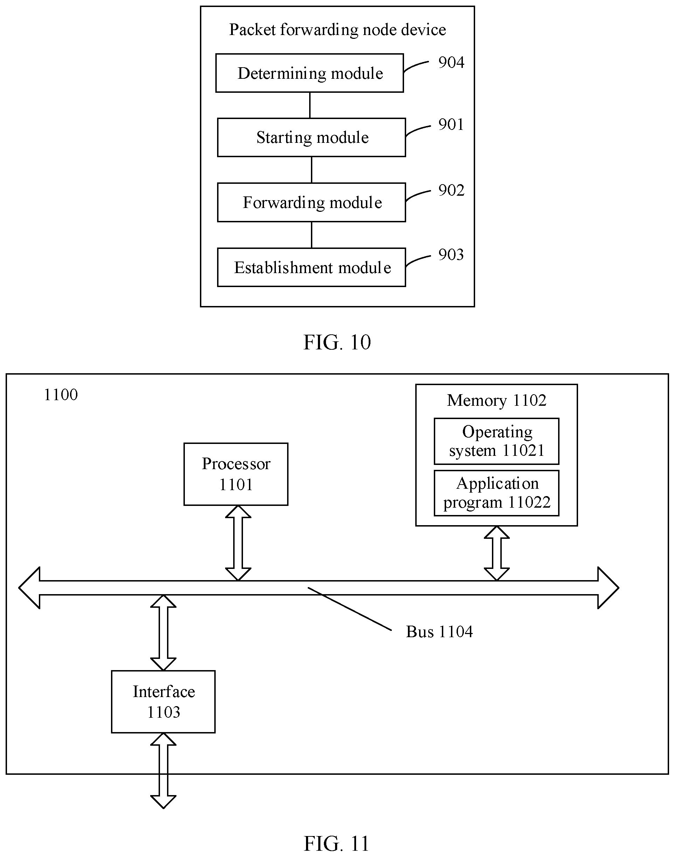

In an example embodiment, in FIG. 10, the packet forwarding node device further includes:
a determining module 904, configured to determine, according to the old forwarding table, whether a loop exists on a packet forwarding path after the network topology changes.

Before the starting module 901 starts the timer, the determining module 904 determines, according to the old forwarding table, that no loop exists on the packet forwarding path after the network topology changes.

In an example embodiment, in FIG. 10, the packet forwarding node device further includes:
a determining module 904, configured to determine, according to the old forwarding table, whether a loop exists on a packet forwarding path after the network topology changes.

When it is determined, according to the old forwarding table, that the loop exists on the packet forwarding path after the network topology changes, the starting module 901 does not start a timer, and the establishment module 903 establishes the new forwarding table. After after establishment of the new forwarding table is completed, the forwarding module 902 switches the old forwarding table to the new forwarding table, and forwards the BIER packet according to the new forwarding table.

In an example embodiment, in FIG. 10, the packet forwarding node device further includes:
a determining module 904, configured to determine, according to the old forwarding table, whether a loop exists on a packet forwarding path after the network topology changes.

When it is determined, according to the old forwarding table, that the loop exists on the packet forwarding path after the network topology changes, the starting module 901 does not start the timer, and the forwarding module 902 is configured to update the old forwarding table based on the changed network topology, and forward the BIER packet according to the updated forwarding table.

In an example embodiment, the packet forwarding path includes a first path and a second path that is calculated based on the changed network topology. The first path is a path from the destination node device to each neighbor of the destination node device in the old forwarding table. The second path uses each neighbor of the destination node device in the old forwarding table as a start point, and uses an edge node device indicated by a forwarding bit mask of each neighbor of the destination node device as an end point. Existence of the loop means that the second path travels through the destination node device.

In an example embodiment, the determining module 904 is configured to: for any neighbor of the destination node device in the old forwarding table, determine whether a path, indicated by a forwarding bit mask of the any neighbor, of each edge node device in the changed network topology travels through the destination node device; and when a path of any edge node device in the changed network topology travels through the destination node device, determine that the loop exists on the packet forwarding path after the network topology changes; or when the path of each edge node device in the changed network topology does not travel through the destination node device, determine that no loop exists on the packet forwarding path after the network topology changes.

In an example embodiment, the determining module 904 is configured to: establish a shortest path tree in the changed network topology by using each neighbor of the destination node device in the old forwarding table as a root; traverse identifiers of edge node devices that arrive on the shortest path tree through the destination node device, to obtain a bit string; perform an AND operation on the bit string and the forwarding bit mask of the neighbor of the destination node device; and when the result is 0, determine that no loop exists on the packet forwarding path after the network topology changes; or when the result is not 0, determine that the loop exists on the packet forwarding path after the network topology changes.

In an example embodiment, the forwarding module 902 is configured to: before the timer expires, forward the BIER packet by using old multiple load balancing entries.

The establishment module 903 is configured to establish new multiple load balancing entries based on a quantity of load balancing paths.

The forwarding module 902 is configured to: after the timer expires, switch a forwarding table of the multiple load balancing entries to the new multiple load balancing entries, and forward the BIER packet according to the new multiple load balancing entries.

It should be understood that, when the apparatuses provided in FIG. 9 and FIG. 10 implement functions of the apparatuses, division into the foregoing functional modules is merely used as an example for description. In actual application, the foregoing functions may be allocated to different functional modules for implementation based on a requirement. In other words, an inner structure of a device is divided into different functional modules, to implement all or some of the functions described above. In addition, the apparatuses provided in the foregoing embodiments and the method embodiments pertain to a same concept. For a specific implementation process thereof, refer to the method embodiments. Details are not described herein again.

FIG. 11 is a schematic diagram of a hardware structure of a packet forwarding node device 1100 according to an embodiment of this application. The packet forwarding node device 1100 shown in FIG. 11 may perform corresponding steps that are performed by the packet forwarding node device in the method in the foregoing embodiment.

As shown in FIG. 11, the packet forwarding node device 1100 includes a processor 1101, a memory 1102, an interface 1103, and a bus 1104. The interface 1103 may be implemented in a wireless or wired manner. Specifically, the interface 1103 may be a network interface card. The processor 1101, the memory 1102, and the interface 1103 are connected by using the bus 1104.

The interface 1103 may specifically include a transmitter and a receiver, configured to send and receive information between the packet forwarding node device and another node device in the foregoing embodiment. For example, the interface 1103 is configured to support to receive a BIER packet sent by a neighboring node device. The processor 1101 is configured to perform processing that is performed by the packet forwarding node device in the foregoing embodiment. For example, the processor 1101 is configured to start a timer when it is determined that a network topology changes; before the timer expires, forward the BIER packet by using an old forwarding table and establishing a new forwarding table, where the old forwarding table is a forwarding table used by the destination node device before the network topology changes, the new forwarding table is a forwarding table established by the destination node device based on the changed network topology, and the timer indicates that establishment of the new forwarding table is completed before the timer expires; and after the timer expires, switch the old forwarding table to the new forwarding table, and forward the BIER packet according to the new forwarding table. The processor 1101 and/or are/is used in another process of the technology described in this specification. For example, the processor 1101 is configured to support steps 501 to 503 in FIG. 5. The memory 1102 includes an operating system 11021 and an application program 11022, and is configured to store a program, code, or instructions. When executing the program, the code, or the instructions, the processor or a hardware device may complete a processing process related to the packet forwarding node device in the method embodiment. Optionally, the memory 1102 may include a read-only memory (English: Read-only Memory, ROM for short) and a random access memory (English: Random Access Memory, RAM for short). The ROM includes a basic input/output system (English: Basic Input/Output System, BIOS for short) or an embedded system. The RAM includes an application program and an operating system. When the packet forwarding node device 1100 needs to run, the BIOS built into the ROM or a bootloader in the embedded system is used to boot a system to start, and boot the packet forwarding node device to enter a normal running state. After entering the normal running state, the packet forwarding node device runs the application program and the operating system in the RAM, to complete the processing process related to the packet forwarding node device in the method embodiment.

It may be understood that FIG. 11 shows only a simplified design of the packet forwarding node device 1100. In actual application, the packet forwarding node device may include any quantity of interfaces, processors, or memories.

It should be understood that the processor may be a central processing unit (Central Processing Unit, CPU); or may be another general-purpose processor, a digital signal processor (digital signal processing, DSP), an application-specific integrated circuit (application specific integrated circuit, ASIC), a field programmable gate array (field-programmable gate array, FPGA) or another programmable logic device, a discrete gate or transistor logic device, or a discrete hardware component, or the like. The general-purpose processor may be a microprocessor, any conventional processor, or the like. It should be noted that the processor may be a processor that supports an advanced reduced instruction set computing machine (advanced RISC machines, ARM) architecture.

Further, in an optional embodiment, the foregoing memory may include a read-only memory and a random access memory, and provide instructions and data to the processor. The memory may further include a non-volatile random access memory. For example, the memory may further store information about a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not limitation, many forms of RAMs are available. For example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A computer-readable storage medium is further provided. The storage medium stores at least one instruction, and a processor loads and executes the at least one instruction to implement any one of the foregoing packet forwarding methods.

This application provides a computer program. When the computer program is executed by a computer, the processor or the computer may perform corresponding steps and/or procedures in the foregoing method embodiments.

All or some of the foregoing embodiments may be implemented by using software, hardware, firmware, or any combination thereof. When the embodiments are implemented by using software, all or some of the embodiments may be implemented in a form of a computer program product. The computer program product includes one or more computer instructions. When the computer program instructions are loaded and executed on a computer, all or some of the procedure or functions according to this application are generated. The computer may be a general-purpose computer, a special-purpose computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk), or the like.

The foregoing descriptions are merely the embodiments of this application, but are not intended to limit this application. Any modification, equivalent replacement, or improvement made without departing from the spirit and principle of this application should fall within the protection scope of this application.

## Claims

1. A packet forwarding method, wherein the method is used to forward a bit index explicit replication BIER packet, and the method comprises:
starting, by a destination node device, a timer when the destination node device determines that a network topology changes;
before the timer expires, forwarding, by the destination node device, the BIER packet by using an old forwarding table and establishing a new forwarding table, wherein the old forwarding table is a forwarding table used by the destination node device before the network topology changes, the new forwarding table is a forwarding table established by the destination node device based on the changed network topology, and the timer indicates that establishment of the new forwarding table is completed before the timer expires; and
after the timer expires, switching, by the destination node device, the old forwarding table to the new forwarding table, and forwarding the BIER packet according to the new forwarding table.

2. The method according to claim 1, wherein when the destination node device determines that the network topology changes, the method further comprises:
determining, by the destination node device according to the old forwarding table, whether a loop exists on a packet forwarding path after the network topology changes; and
before starting the timer, determining, by the destination node device according to the old forwarding table, that no loop exists on the packet forwarding path after the network topology changes.

3. The method according to claim 1, wherein when the destination node device determines that the network topology changes, the method further comprises:
determining, by the destination node device according to the old forwarding table, whether a loop exists on a packet forwarding path after the network topology changes; and
when determining, according to the old forwarding table, that the loop exists on the packet forwarding path after the network topology changes, skipping starting, by the destination node device, the timer, and establishing, by the destination node device, the new forwarding table; and after establishment of the new forwarding table is completed, switching the old forwarding table to the new forwarding table, and forwarding the BIER packet according to the new forwarding table.

4. The method according to claim 1, wherein when the destination node device determines that the network topology changes, the method further comprises:
determining, by the destination node device according to the old forwarding table, whether a loop exists on a packet forwarding path after the network topology changes; and
when determining, according to the old forwarding table, that the loop exists on the packet forwarding path after the network topology changes, skipping starting, by the destination node device, the timer, updating, by the destination node device, the old forwarding table based on the changed network topology, and forwarding the BIER packet according to the updated forwarding table.

5. The method according to any one of claims 2 to 4, wherein the packet forwarding path comprises a first path and a second path that is calculated based on the changed network topology; the first path is a path from the destination node device to each neighbor of the destination node device in the old forwarding table, and the second path uses each neighbor of the destination node device in the old forwarding table as a start point, and uses an edge node device indicated by a forwarding bit mask of each neighbor of the destination node device as an end point; and existence of the loop means that the second path travels through the destination node device.

6. The method according to any one of claims 2 to 5, wherein the determining, by the destination node device according to the old forwarding table, whether a loop exists on a packet forwarding path after the network topology changes comprises:
for any neighbor of the destination node device in the old forwarding table, determining, by the destination node device, whether a path, indicated by a forwarding bit mask of the any neighbor, of each edge node device in the changed network topology travels through the destination node device; and
when a path of any edge node device in the changed network topology travels through the destination node device, determining that the loop exists on the packet forwarding path after the network topology changes; or
when the path of each edge node device in the changed network topology does not travel through the destination node device, determining that no loop exists on the packet forwarding path after the network topology changes.

7. The method according to any one of claims 2 to 5, wherein the determining, by the destination node device according to the old forwarding table, whether a loop exists on a packet forwarding path after the network topology changes comprises:
establishing, by the destination node device, a shortest path tree in the changed network topology by using each neighbor of the destination node device in the old forwarding table as a root;
traversing identifiers of edge node devices that arrive on the shortest path tree through the destination node device, to obtain a bit string;
performing an AND operation on the bit string and the forwarding bit mask of the neighbor of the destination node device; and
when a result is 0, determining that no loop exists on the packet forwarding path after the network topology changes; or
when a result is not 0, determining that the loop exists on the packet forwarding path after the network topology changes.

8. The method according to any one of claims 1 to 7, wherein before the timer expires, the forwarding, by the destination node device, the BIER packet by using an old forwarding table and establishing a new forwarding table comprises:
before the timer expires, forwarding, by the destination node device, the BIER packet by using old multiple load balancing entries, and establishing new multiple load balancing entries based on a quantity of load balancing paths; and
after the timer expires, the switching, by the destination node device, the old forwarding table to the new forwarding table, and forwarding the BIER packet according to the new forwarding table comprises:
after the timer expires, switching, by the destination node device, a forwarding table of the multiple load balancing entries to the new multiple load balancing entries, and forwarding the BIER packet according to the new multiple load balancing entries.

9. A packet forwarding node device, wherein the packet forwarding node device is configured to forward a bit index explicit replication BIER packet, and the packet forwarding node device comprises:
a starting module, configured to start a timer when it is determined that a network topology changes;
a forwarding module, configured to: before the timer expires, forward the BIER packet by using an old forwarding table, wherein the old forwarding table is a forwarding table used by the packet forwarding node device before the network topology changes; and
an establishment module, configured to: before the timer expires, establish a new forwarding table, wherein the new forwarding table is a forwarding table established by the packet forwarding node device based on the changed network topology, and the timer indicates that establishment of the new forwarding table is completed before the timer expires; wherein
the forwarding module is further configured to: after the timer expires, switch the old forwarding table to the new forwarding table, and forward the BIER packet according to the new forwarding table.

10. The packet forwarding node device according to claim 9, wherein the packet forwarding node device further comprises:
a determining module, configured to determine, according to the old forwarding table, whether a loop exists on a packet forwarding path after the network topology changes; and
before the starting module starts the timer, the determining module determines, according to the old forwarding table, that no loop exists on the packet forwarding path after the network topology changes.

11. The packet forwarding node device according to claim 9, wherein the packet forwarding node device further comprises:
a determining module, configured to determine, according to the old forwarding table, whether a loop exists on a packet forwarding path after the network topology changes; and
when it is determined, according to the old forwarding table, that the loop exists on the packet forwarding path after the network topology changes, the starting module does not start the timer, and the establishment module establishes the new forwarding table; and after establishment of the new forwarding table is completed, the forwarding module switches the old forwarding table to the new forwarding table, and forwards the BIER packet according to the new forwarding table.

12. The packet forwarding node device according to claim 9, wherein the packet forwarding node device further comprises:
a determining module, configured to determine, according to the old forwarding table, whether a loop exists on a packet forwarding path after the network topology changes; and
when it is determined, according to the old forwarding table, that the loop exists on the packet forwarding path after the network topology changes, the starting module does not start the timer, and the forwarding module is configured to update the old forwarding table based on the changed network topology, and forward the BIER packet according to the updated forwarding table.

13. The packet forwarding node device according to any one of claims 10 to 12, wherein the packet forwarding path comprises a first path and a second path that is calculated based on the changed network topology; the first path is a path from the destination node device to each neighbor of the destination node device in the old forwarding table, and the second path uses each neighbor of the destination node device in the old forwarding table as a start point, and uses an edge node device indicated by a forwarding bit mask of each neighbor of the destination node device as an end point; and existence of the loop means that the second path travels through the destination node device.

14. The packet forwarding node device according to any one of claims 10 to 13, wherein the determining module is configured to: for any neighbor of the destination node device in the old forwarding table, determine whether a path, indicated by a forwarding bit mask of the any neighbor, of each edge node device in the changed network topology travels through the destination node device; and when a path of any edge node device in the changed network topology travels through the destination node device, determine that the loop exists on the packet forwarding path after the network topology changes; or when the path of each edge node device in the changed network topology does not travel through the destination node device, determine that no loop exists on the packet forwarding path after the network topology changes.

15. The packet forwarding node device according to any one of claims 10 to 13, wherein the determining module is configured to: establish a shortest path tree in the changed network topology by using each neighbor of the destination node device in the old forwarding table as a root; traverse identifiers of edge node devices that arrive on the shortest path tree through the destination node device, to obtain a bit string; perform an AND operation on the bit string and the forwarding bit mask of the neighbor of the destination node device; and when the result is 0, determine that no loop exists on the packet forwarding path after the network topology changes; or when the result is not 0, determine that the loop exists on the packet forwarding path after the network topology changes.

16. The packet forwarding node device according to any one of claims 9 to 15, wherein the forwarding module is configured to: before the timer expires, forward the BIER packet by using old multiple load balancing entries;
the establishment module is configured to establish new multiple load balancing entries based on a quantity of load balancing paths; and
the forwarding module is configured to: after the timer expires, switch a forwarding table of the multiple load balancing entries to the new multiple load balancing entries, and forward the BIER packet according to the new multiple load balancing entries.

17. A packet forwarding node device, wherein the packet forwarding node device comprises:
a memory and a processor, wherein the memory stores at least one instruction, and the processor loads and executes the at least one instruction to implement the packet forwarding method according to any one of claims 1 to 8.

18. A computer-readable storage medium, wherein the storage medium stores at least one instruction, and a processor loads and executes the instruction to implement the packet forwarding method according to any one of claims 1 to 8.
